# EUROPÄISCHE PATENTANMELDUNG

(11) **EP 4 228 019 A1**
(43) Veröffentlichungstag der Anmeldung: **16.08.2023**
(21) Anmeldenummer: 22156495.8
(22) Anmeldetag: 14.02.2022
(51) Int. Cl.: H01M 4/04, H01M 4/139, B05C 5/02

(54) **VERFAHREN UND VORRICHTUNG ZUR HERSTELLUNG VON BANDFÖRMIGEN ELEKTRODEN**

(71) Anmelder: VARTA Microbattery GmbH, 73479 Ellwangen Jagst (DE); Dürr Systems AG, 74321 Bietigheim-Bissingen (DE)
(72) Erfinder: Gaugler, Winfried, 73479 Ellwangen (DE); Rausch, Dominik, 73566 Bartholomä (DE); Keil, Andreas, 80807 München (DE)
(74) Vertreter: Ostertag & Partner Patentanwälte mbB

(57) **Zusammenfassung**

Es werden ein Verfahren und eine Vorrichtung zur Herstellungvon bandförmigen Elektroden vorgeschlagen, wobei die herzustellenden bandförmigen Elektroden einen bandförmigen Stromkollektor umfassen, der beidseitig mit einer Schicht aus einem Elektrodenmaterial bedeckt ist und der beidseitig einen sich entlang einem seiner Längsränder erstreckenden, nicht mit dem Elektrodenmaterial bedeckten Bereich aufweist. Bei dem Verfahren wird eine bandförmige Metallfolie (100) mit einem Elektrodenmaterial in einem Durchlaufverfahren beschichtet, wobei mehrere parallele Streifen (120) aus dem Elektrodenmaterial auf die erste Seite der bandförmigen Metallfolie (100) und eine gleiche Anzahl paralleler Streifen (110) aus dem Elektrodenmaterial auf die zweite Seite der bandförmigen Metallfolie (100) aufgebracht werden, so dass in Blickrichtungsenkrecht zur bandförmigen Metallfolie (100) jeweils ein Streifen auf der ersten Seite (120) mit einem der Streifen auf der zweiten Seite (110) der bandförmigen Metallfolie (100) überlappt. Dabei bleibt auf beiden Seiten zwischen unmittelbar benachbarten parallelen Streifen (110, 120) aus dem Elektrodenmaterial jeweils ein unbeschichteter streifenförmiger Bereich (111, 121) frei von dem Elektrodenmaterial. Das Verfahren zeichnet sich dadurch aus, dass die parallelen Streifen (110, 120) aus dem Elektrodenmaterial simultan auf die erste Seite und die zweite Seite der bandförmigen Metallfolie (100) aufgebracht werden.

## Beschreibung

Die vorliegende Erfindung betrifft ein Verfahren zur Herstellung von bandförmigen Elektroden, die einen bandförmigen Stromkollektor umfassen, der beidseitig mit einer Schicht aus einem Elektrodenmaterial bedeckt ist und der beidseitig einen sich entlang einem seiner Längsränder erstreckenden, nicht mit dem Elektrodenmaterial bedeckten Bereich aufweist. Weiterhin betrifft die Erfindung eine Vorrichtung zur Herstellung von derartigen Elektroden sowie die Verwendung von derartigen Elektroden und damit herstellbare elektrochemische Energiespeicherelemente.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive Elektrode und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung des elektrochemischen Energiespeicherelements reversibel ist, also die Möglichkeit besteht, die bei der Entladung erfolgte Umwandlung von chemischer Energie in elektrische Energie wieder umzukehren und die Zelle bzw. das Element wieder zu laden, spricht man von einem sekundären Element. Die bei sekundären Elementen allgemein übliche Bezeichnung der negativen Elektrode als Anode und die Bezeichnung der positiven Elektrode als Kathode bezieht sich auf die Entladefunktion des elektrochemischen Energiespeicherelements.

Vorliegend wird unter dem Begriff "elektrochemisches Energiespeicherelement" nicht nur eine einzelne elektrochemische Zelle verstanden sondern auch eine Batterie, die aus einer Mehrzahl einzelner elektrochemischer Zellen aufgebaut ist.

In der WO 2017/215900 A1 sind zylindrische Rundzellen beschrieben, bei denen ein Verbundkörper aus bandförmigen Elektroden gebildet ist und in Form eines Wickels vorliegt. Die Elektroden weisen jeweils mit Elektrodenmaterial beladene Stromkollektoren auf. Entgegengesetzt gepolte Elektroden sind innerhalb des Verbundkörpers versetzt zueinander angeordnet, so dass Längsränder der Stromkollektoren der positiven Elektroden an einer Stirnseite und Längsränder der Stromkollektoren der negativen Elektroden an einer zweiten Stirnseite aus dem Wickel austreten. Zur elektrischen Kontaktierung der Stromkollektoren weist die Zelle Kontaktplatten auf, die auf den Stirnseiten des Wickels aufsitzen und mit den herausstehenden Längsrändern der Stromkollektoren durch Verschweißung verbunden sind. Dadurch ist es möglich, die Stromkollektoren und damit auch die dazugehörigen Elektroden über ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

Um bei solchen Zellen eine gute Anbindung der Längsränder der Stromkollektoren an die Kontaktplatte zu gewährleisten, ist es zweckmäßig, zur Bildung des Wickels bandförmige Elektroden zu verwenden, die entlang einem ihrer Längsränder, nämlich dem zu kontaktierenden Längsrand, frei von Elektrodenmaterial sind. Diese bandförmigen Elektroden weisen also einen bandförmigen Stromkollektor auf, auf dem beidseitig eine Schicht aus einem positiven oder einem negativen Elektrodenmaterial aufgetragen ist und der entlang einem seiner Längsränder einen Bereich aufweist, in dem er beidseitig nicht mit dem Elektrodenmaterial bedeckt ist. Entlangseinem zweiten Längsrand weist der Stromkollektor bevorzugt keinen solchen freien Randbereich auf.

Es ist bekannt, solche bandförmigen Elektroden in einem Beschichtungsprozess herzustellen, bei dem pastöse Elektrodenmaterialien auf Stromkollektoren aufgetragen werden. Meist handelt es sich bei den Stromkollektoren um bandförmige Metallfolien. Der Auftrag der Elektrodenmaterialien erfolgt beispielsweise mittels einer Schlitzdüse, wie sie in der EP 3 608 028 B1 beschrieben ist. In der Regel wird in einem Tandem-Prozess zunächst eine Seite einer bandförmigen Metallfolie mit einem Streifen aus dem Elektrodenmaterial beschichtet. Das einseitig beschichtete Band wird anschließend getrocknet und aufgewickelt. In einem späteren, weiteren Schritt wird die zweite Seite der bandförmigen Metallfolie mit dem gleichen Elektrodenmaterial, wieder in Form eines Streifens, beschichtet und getrocknet.

Von Bedeutung ist, dass der Auftrag der Streifen aus den Elektrodenmaterialien auf die beiden Seiten der Strom kollektoren idealerweise ohne jeden Versatz erfolgen muss, also derart, dass in Blickrichtung senkrecht zur bandförmigen Metallfolie die Streifen auf den beiden Seiten vollständig miteinander überlappen. Insbesondere sollten auch die nicht mit dem Elektrodenmaterial bedeckten Bereiche auf beiden Seiten des Stromkollektors entlang des jeweiligen Längsrands über die gesamte Länge der Elektrode eine gleichbleibende Breite aufweisen. Dies ist bei dem beschriebenen Tandem-Prozess schwer zu realisieren, die geforderte Präzision wird dabei oftmals nicht erreicht.

Es ist weiterhin auch bereits bekannt, zur Herstellung von Elektrodenbändern mit freien Randbereichen mehrere parallele Streifen aus einem Elektrodenmaterial beidseitig auf eine bandförmige Metallfolie aufzubringen und die Metallfolie anschließend, beispielsweise zwischen den Streifen, zu zertrennen, so dass aus der beschichteten bandförmigen Metallfolie mehrere bandförmige Elektroden resultieren. Das Problem des Versatzes zwischen Streifen auf unterschiedlichen Seiten des Stromkollektors existiert aber auch bei dieser Vorgehensweise.

Zu Lösung dieser Probleme wurde auch schon erwogen, Bereiche der Metallfolie, die nicht mit dem Elektrodenmaterial beschichtet werden sollen, abzukleben, und nach erfolgter Beschichtung die Abkleber zu entfernen. Diese Vorgehensweise ist allerdings extrem aufwendig, auch weil in der Regel ein zusätzlicher Schritt zur Entfernung von Klebstoffrückständen erforderlich sein kann.

Ein anderer Ansatz arbeitet mit einem nachträglichen Entfernen der Beschichtung in den Längsrandbereichen der Elektrodenbänder, beispielsweise mittels Laser oder auf mechanischem Weg Auch diese Verfahren sind sehr aufwendig.

### AUFGABE UND LÖSUNG

Die bekannten Verfahren aus dem Stand der Technik zur Herstellung von bandförmigen Elektroden mit einem von Elektrodenmaterial freien Randbereich haben daher bisher noch nicht zu befriedigenden Lösungen geführt, die insbesondere in einer Massenproduktion die geforderte Präzision der Beschichtung erreichen und die gleichzeitig den Aufwand in einem akzeptablen Rahmen halten.

Vor diesem Hintergrund stellt sich die Erfindung die Aufgabe, ein verbessertes Verfahren zur Herstellung von bandförmigen Elektroden bereitzustellen, die einen beidseitig mit Elektrodenmaterial beschichteten bandförmigen Stromkollektor aufweisen, wobei dieser entlang einem seiner Längsränder einen nicht mit dem Elektrodenmaterial bedeckten Randbereich aufweist, der zu elektrischen Kontaktierung beispielsweise mit einer Kontaktplatte vorgesehen ist. Im Hinblick auf eine Fertigung in großen Stückzahlen sollen mehrere bandförmige Elektroden parallel gefertigt werden können, wobei die Problematik eines Spurversatzes zwischen den beschichteten Bereichen der bandförmigen Elektroden adressiert werden soll. Das Verfahren soll damit eine Herstellung von bandförmigen Elektroden mit großer Präzision ermöglichen, wobei das Verfahren gleichzeitig für eine Massenproduktion geeignet sein soll.

Diese Aufgabe wird durch ein Verfahren gelöst, wie es sich aus dem Anspruch 1 ergibt. Bevorzugte Ausgestaltungen dieses Verfahrens sind Gegenstand der von Anspruch 1 abhängigen Ansprüche. Die Aufgabe wird weiterhin durch eine Vorrichtung zur Herstellung von bandförmigen Elektroden gelöst, die Gegenstand des unabhängigen Anspruchs 8 ist. Bevorzugte Ausführungsformen dieser Vorrichtung ergeben sich aus den von Anspruch 8 abhängigen Ansprüchen. Weiterhin von der Erfindung umfasst sind bandförmige Elektroden, die nach dem Verfahren gemäß Anspruch 1 hergestellt sind, die Verwendung dieser bandförmigen Elektroden und elektrochemische Energiespeicherelemente mit solchen bandförmigen Elektroden, wie es sich aus den weiteren unabhängigen Ansprüchen ergibt.

Das erfindungsgemäße Verfahren dient zur Herstellung von bandförmigen Elektroden, die einen bandförmigen Stromkollektor umfassen. Der Stromkollektor weist zwei Seiten auf und ist beidseitig mit einer Schicht aus einem Elektrodenmaterial bedeckt. Weiterhin weist der Stromkollektor beidseitig einen sich entlang einem seiner Längsränder erstreckenden, nicht mit Elektrodenmaterial bedeckten Bereich auf. Entlang diesem Längsrand ist der Stromkollektor also auf beiden Seiten frei von Elektrodenmaterial. Dieser Bereich ist zur elektrischen Kontaktierung der Elektrode vorgesehen, beispielsweise mit einer Kontaktplatte oder dem Gehäuse einer elektrochemischen Energiespeicherzelle oder einer Batterie.

Das erfindungsgemäße Verfahren zur Herstellung von solchen bandförmigen Elektroden umfasst die folgenden Verfahrensschritte:
a. Bereitstellen einer bandförmigen Metallfolie.
b. Beschichten der bandförmigen Metallfolie mit einem Elektrodenmaterial in einem Durchlaufverfahren, wobei mehrere parallele Streifen aus dem Elektrodenmaterial auf die erste Seite der bandförmigen Metallfolie und eine gleiche Anzahl paralleler Streifen aus dem Elektrodenmaterial auf die zweite Seite der bandförmigen Metallfolie aufgebracht werden, so dass in Blickrichtung senkrecht zur bandförmigen Metallfolie jeweils ein Streifen auf der ersten Seite mit einem der Streifen auf der zweiten Seite der bandförmigen Metallfolie überlappt, wobei auf beiden Seiten zwischen unmittelbar benachbarten parallelen Streifen aus dem Elektrodenmaterial jeweils ein unbeschichteter streifenförmiger Bereich frei von dem Elektrodenmaterial bleibt.

Besonders ist das Verfahren durch das folgende Merkmal gekennzeichnet:
c. Die parallelen Streifen aus dem Elektrodenmaterial werden simultan auf die erste Seite und die zweite Seite der bandförmigen Metallfolie aufgebracht.

Unter simultaner Aufbringung ist zu verstehen, dass beide Seiten der bandförmigen Metallfolie gleichzeitig und in einem Arbeitsgang und in zeitlicher Überlappung beschichtet werden.

Erfindungsgemäß wird nicht wie bei herkömmlichen Herstellungsverfahren zunächst eine Seite der Metallfolie beschichtet bevor die Beschichtung auf der anderen Seite, jeweils mit anschließender Trocknung, erfolgt. Vielmehr sieht das erfindungsgemäße Verfahren vor, dass die Beschichtung der ersten und der zweiten Seite simultan erfolgt. Ein mehrfaches Verarbeiten der bandförmigen Metallfolie in aufeinanderfolgenden Beschichtungsvorgängen, einschließlich damit einhergehender Aufwickel-, Abwickel-, Umlenk- und Kalibrierungsvorgänge, ist nicht erforderlich. Dadurch kann der Problematik eines möglichen Versatzes zwischen den Streifen auf der ersten und der zweiten Seite der bandförmigen Metallfolie besser begegnet werden.

Bei herkömmlichen Verfahren ist ein Versatz von überlappenden Streifen auf den beiden Seiten der Metallfolie von einigen Zehnteln eines Millimeters typisch. Derartige Abweichungen wirken sich sehr nachteilig auf die Leistungsfähigkeit der Elektroden aus. Zudem kann es durch die nicht optimale Deckungsgleichheit der Streifen zu Problemen bei der nachfolgenden Weiterverarbeitung der Elektroden zu Energiespeicherelementen und der dabei erforderlichen elektrischen Kontaktierung der Elektroden kommen. Diese Nachteile können mit dem erfindungsgemäßen Herstellungsverfahren vermieden werden, da durch den simultanen Beschichtungsprozess die Präzision des Streifenauftrags verbessert wird.

In einer besonders bevorzugten und vorteilhaften Ausgestaltung des erfindungsgemäßen Verfahrens zeichnet es sich weiterhin durch mindestens eines der folgenden zusätzlichen Merkmale a. bis c. aus:
a. Die Streifen aus dem Elektrodenmaterial werden mittels Auftragsdüsen aufgebracht.
b. Es wird, vorzugsweise mit Hilfe mindestens eines Sensors, erfasst, ob zwischen überlappenden Streifen auf der ersten Seite und der zweiten Seite ein Versatz auftritt und/oder ob ein Versatz einen vordefinierten Schwellenwert überschreitet.
c. Im Falle eines Versatzes zwischen überlappenden Streifen auf der ersten Seite und der zweiten Seite und/oder bei einem Überschreiten des vordefinierten Schwellenwerts für den Versatz wird die Position mindestens einer der Auftragsdüsen relativ zu der bandförmigen Metallfolie korrigiert.

Besonders bevorzugt sind die unmittelbar vorstehenden Merkmale a. bis c. in Kombination realisiert.

In dieser bevorzugten Ausgestaltung des erfindungsgemäßen Verfahrens wird der tatsächlich auftretende Versatz zwischen den überlappenden Streifen auf der ersten Seite und der zweiten Seite der Metallfolie erfasst und/oder gemessen, so dass bei Bedarf Korrekturmaßnahmen eingeleitet werden können. Vorzugsweise wird hierzu die Position mindestens einer der Auftragsdüsen, mit denen die Streifen aus dem Elektrodenmaterial aufgebracht werden, entsprechend korrigiert. In dieser Ausgestaltung des Verfahrens ist es also vorgesehen, dass eine oder mehrere Auftragsdüsen in ihrer Position verändert werden können. Nach einer kurzen Einlaufphase während der beidseitigen Beschichtung der bandförmigen Metallfolie kann also überprüft werden, ob ein Spurversatz vorliegt, so dass gegebenenfalls sehr schnell eingegriffen und korrigiert werden kann. Die Regelstrecke zwischen den Beschichtungen der beiden Seiten ist dabei sehr kurz, so dass die Beschichtungsbahnen individuell geregelt werden können. Dabei ist die Beschichtung unabhängig von anderen Parametern, wie insbesondere einer nachfolgenden Trocknung. Dies führt zu hochgenauen, deckungsgleichen, beidseitigen und mehrspurigen Beschichtungen. Auf diese Weise kann also eine beidseitige, mehrspurige Streifenbeschichtung realisiert werden, die keine späteren Korrekturen oder ein späteres Nachbearbeiten für eine hochgenaue Spurtreue erfordert.

In einer besonders vorteilhaften Ausführungsform des erfindungsgemäßen Verfahrens zeichnet sich das Verfahren durch mindestens eines der folgenden zusätzlichen Merkmale a. und b. aus:
a. Die Aufbringung der Streifen aus dem Elektrodenmaterial erfolgt auf mindestens einer der Seiten der bandförmigen Metallfolie mittels mehrerer Eindüsen-Beschichtungsköpfe mit jeweils einer Auftragsdüse, deren Positionen zueinander variiert werden können.
b. Die Eindüsen-Beschichtungsköpfe sind jeweils senkrecht zur Durchlaufrichtung der bandförmigen Metallfolie verschiebbar.

Besonders bevorzugt sind dabei die vorgenannten Merkmale a. und b. in Kombination miteinander verwirklicht.

Im Falle einer Verschiebbarkeit der Eindüsen-Beschichtungsköpfe senkrecht zur Durchlaufrichtung der bandförmigen Metallfolie lässt sich der Abstand der Auftragsdüsen zum Rand der Metallfolie variieren, so dass auf einen gegebenenfalls auftretenden Versatz bei der Beschichtung der beiden Seiten in Bezug auf die überlappenden Streifen auf beiden Seiten der Metallfolie reagiert und die Position ein oder mehrerer Auftragsdüsen korrigiert werden kann.

Prinzipiell können auf beiden Seiten der bandförmigen Metallfolie entsprechende, einstellbare Eindüsen-Beschichtungsköpfe vorgesehen sein, um bei der Beschichtung auf beiden Seiten der Metallfolie Korrekturen vornehmen zu können.

In besonders bevorzugten Ausführungsformen ist allerdings mindestens eines der unmittelbar folgenden zusätzlichen Merkmale vorgesehen:
a. Die Aufbringung der Streifen aus dem Elektrodenmaterial erfolgt auf der ersten Seite der bandförmigen Metallfolie mittels mindestens eines Mehrdüsen-Beschichtungskopfes, der mehrere Auftragsdüsen in fixen Abständen zueinander umfasst,
b. die Aufbringung der Streifen aus dem Elektrodenmaterial erfolgt auf der zweiten Seite der bandförmigen Metallfolie mittels der Eindüsen-Beschichtungsköpfe mit jeweils einer Auftragsdüse, deren Positionen relativ zu anderen Auftragsdüsen variiert werden können.

Vorzugsweise sind die vorgenannten Merkmale a. und b. in Kombination miteinander verwirklicht, so dass auf der einen Seite der bandförmigen Metallfolie die Beschichtung mit starren Auftragsdüsen beziehungsweise mit einem oder mehreren Mehrdüsen-Beschichtungsköpfen, die mehrere Auftragsdüsen in fixen Abständen zueinander umfassen, erfolgt, während auf der anderen Seite die Beschichtung der bandförmigen Metallfolie mit flexiblen Auftragsdüsen, insbesondere mit mehreren Eindüsen-Beschichtungsköpfen, die in ihrer Position variiert werden können, vorgenommen wird.

Da in dieser Ausführungsform die Beschichtung auf einer der Seiten der Metallfolie bei einem gegebenenfalls auftretenden Versatz angepasst werden kann, kann ohne weitere Nachteile auf der anderen Seite mit starren Auftragsdüsen gearbeitet werden, so dass der Einsatz der etwas aufwendigeren flexiblen Auftragsdüsen auf eine Seite beschränkt werden kann.

Die hier angesprochene erste Seite und die zweite Seite sind im Prinzip austauschbar. Die starren Auftragsdüsen können also sowohl einer A-Seite als auch einer B-Seite und die flexiblen Auftragsdüsen sowohl einer B-Seite als auch einer A-Seite bei der Beschichtung einer Metallfolie zugeordnet sein.

In dieser besonders vorteilhaften Ausgestaltung des erfindungsgemäßen Verfahrens findet eine simultan beidseitige und mehrspurige Beschichtung der beiden Seiten des Metallfolienbandes mit Elektrodenmaterial in einem kontinuierlichen Verfahren, gewissermaßen am laufenden Band, statt, wobei die Beschichtung der einen Seite der bandförmigen Metallfolie mit einem Elektrodenmaterial unter Verwendung eines oder gegebenenfalls mehrerer Mehrdüsen-Beschichtungsköpfe mit zwei oder mehr starr angeordneten Auftragsdüsen erfolgt. Die Beschichtung der anderen Seite der bandförmigen Metallfolie mit einem Elektrodenmaterial erfolgt unter Verwendung von zwei oder mehr Eindüsen-Beschichtungsköpfen mit jeweils einer Auftragsdüse. Hierbei sind die Eindüsen-Beschichtungsköpfe in der Breite der bandförmigen Metallfolie derart verschieblich angeordnet, dass der Auftrag des Elektrodenmaterials zur Vermeidung eines Versatzes zwischen den Spuren des Elektrodenmaterials auf beiden Seiten der Metallfolie durch Verschiebung der Eindüsen-Beschichtungsköpfe anpassbar und korrigierbar ist.

Sowohl die Auftragsdüsen des Mehrdüsen-Beschichtungskopfes als auch die Auftragsdüsen der Eindüsen-Beschichtungsköpfe können gemäß der EP 3 608 028 B1 ausgestaltet sein.

Die Erfassung eines möglichen Versatzes zwischen den überlappenden Streifen auf der ersten Seite und der zweiten Seite der bandförmigen Metallfolie kann auf unterschiedliche Weise erfolgen. Besonders bevorzugt ist die Verwendung einer Sensorik, die diesen Versatz in automatisierter Weise erfassen kann. In bevorzugten Ausgestaltungen des Verfahrens kann in dieser Hinsicht mindestens eines der folgenden zusätzlichen Merkmale verwirklicht sein:
a. Zur Erfassung eines mögliches Versatzes zwischen überlappenden Streifen auf der ersten Seite und der zweiten Seite der bandförmigen Metallfolie werden der Abstand mindestens eines der Streifen von einem Längsrand der bandförmigen Metallfolie und/oder eine Änderung dieses Abstands erfasst,
b. zur Erfassung eines mögliches Versatzes zwischen überlappenden Streifen auf der ersten Seite und der zweiten Seite der bandförmigen Metallfolie werden der Abstand mindestens eines der Streifen von einem benachbarten Streifen und/oder eine Änderung dieses Abstands erfasst,
c. zur Erfassung eines möglichen Versatzes zwischen überlappenden Streifen auf der ersten Seite und der zweiten Seite der bandförmigen Metallfolie werden die Mittellinien derStreifen und/oder eine Änderung der Mittellinien erfasst.

In bevorzugten Ausgestaltungen können die vorgenannten Merkmale a. bis c. alternativ verwirklicht sein. Bevorzugt können zwei oder drei der vorgenannten Merkmale a. bis c., insbesondere die Merkmale a. und b., jedoch auch in Kombination miteinander realisiert sein.

Als Sensorik zur Erfassung des möglichen Versatzes kann mit Vorteil beispielsweise eine Kamera eingesetzt werden. In anderen Ausführungsformen kann beispielsweise ein Kantensensor oder Ähnliches verwendet werden. Eine weitere Möglichkeit ist beispielsweise die Messung von Lichtreflexionen, da sich die beschichteten Bereiche und die unbeschichteten Bereiche der Metallfolie durch ihre Reflexionseigenschaften klar voneinander unterscheiden lassen.

In besonders bevorzugten und vorteilhaften Ausgestaltungen des erfindungsgemäßen Verfahrens zeichnet sich das Verfahren durch mindestens eines der nachfolgenden zusätzlichen Merkmale aus:
a. Nach der beidseitigen Beschichtung der bandförmigen Metallfolie erfolgt eine Trocknung der Streifen aus dem Elektrodenmaterial.
b. Die Trocknung des Elektrodenmaterials erfolgt in einem Schwebetrockner.

Vorzugsweise sind die vorgenannten Merkmale a. und b. in Kombination miteinander verwirklicht.

Eine Trocknung der Elektrodenmaterialien unmittelbar nach deren Auftragung auf die bandförmige Metallfolie ist in der Regel zweckmäßig. Eine solche Trocknung ist vom Prinzip her bekannt. Das erfindungsgemäße Verfahren zeichnet sich jedoch gegenüber herkömmlichen Verfahren insbesondere dadurch aus, dass die Trocknung der Beschichtung auf beiden Seiten der bandförmigen Metallfolie gleichzeitig, also zeitlich überlappend in ein- und demselben Arbeitsschritt, erfolgt. Hierdurch herrschen für die Trocknungder Beschichtung auf beiden Seiten der bandförmigen Metallfolie exakt die gleichen Bedingungen, so dass durch die gleichzeitige Trocknung keine weiteren Toleranzen bei den Beschichtungen auf beiden Seiten und damit keine weiteren Toleranzen in dem Spurenauftrag auftreten. Auch durch diese Maßnahme wird die Herstellung hochgenauer und deckungsgleicher Streifen aus Elektrodenmaterial auf beiden Seiten der Metallfolie weiter verbessert. Zudem verbessert ein gleichzeitiges Trocknen der Beschichtungen die Energiebilanz des Verfahrens.

Die Verwendung eines Schwebetrockners für die Trocknung ist besonders vorteilhaft, da hierbei kein Kontakt der beidseitig frisch beschichteten Metallfolie, beispielsweise mit einer Rolle oder Ähnlichem, auftritt. Für einen Schwebetrockner kann beispielsweise in an sich bekannter Weise eine Vakuumplatte in Verbindung mit Luftdüsen in an sich bekannter Weise eingesetzt werden.

Beim Auftrag mehrerer Streifen aus einem Elektrodenmaterial auf die bandförmige Metallfolie ist es zweckmäßig, dass die beschichtete Metallfolie in Längsrichtung zertrennt wird, um aus der Metallfolie die herzustellenden bandförmigen Elektroden in der gewünschten Breite bereitzustellen.

In besonders bevorzugten Ausgestaltungen des erfindungsgemäßen Verfahrens ist mindestens eines der nachfolgenden zusätzlichen Merkmale vorgesehen:
a. Nach der beidseitigen Beschichtung der bandförmigen Metallfolie und/oder nach der Trocknung des Elektrodenmaterials wird die mit dem Elektrodenmaterial beschichtete bandförmige Metallfolie zur Ausbildung der bandförmigen Elektroden in Längsrichtung zertrennt, insbesondere geschnitten,
b. Zur Zertrennung der bandförmigen Metallfolie wird die Folie in Längsrichtung geschnitten, wobei ein Schnitt durch mindestens einen der unbeschichteten streifenförmigen Bereiche, die zwischen benachbarten Streifen aus dem Elektrodenmaterial angeordnet sind, erfolgt,
c. Zur Zertrennung der bandförmigen Metallfolie wird die Folie in Längsrichtung geschnitten, wobei ein Schnitt durch mindestens einen der Streifen erfolgt.

Vorzugsweise sind die vorgenannten Merkmale a. bis c. in Kombination miteinander verwirklicht.

In diesen Ausführungsformen werden vorzugsweise die unbeschichteten streifenförmigen Bereiche zwischen benachbarten Streifen aus dem Elektrodenmaterial einmal mittig in Längsrichtung und die Streifen aus dem Elektrodenmaterial einmal mittig in Längsrichtung durchtrennt, insbesondere geschnitten, so dass aus der Metallfolie mehrere der herzustellenden Elektroden bereitgestellt werden können. Die erforderliche Länge der bandförmigen Elektrode kann je nach den gewünschten Dimensionen des herzustellenden Energiespeicherelements nachträglich entsprechend geschnitten werden.

Die Breite der bandförmigen Metallfolie kann an die Anzahl und Abmessungen der herzustellenden bandförmigen Elektroden angepasst werden. Bevorzugt können zwei Streifen, drei Streifen, vier Streifen oder fünf Streifen deckungsgleich auf beiden Seiten der Metallfolie aufgetragen werden. Durch das einmalige Schneiden in Längsrichtung können beispielsweise aus einem zweispurigen Streifen des beidseitig aufgetragenen Elektrodenmaterials zwei bandförmige Elektroden gewonnen werden.

Besonders bevorzugt können auf die bandförmige Metallfolie beidseitig beispielsweise drei bis acht Streifen des Elektrodenmaterials aufgetragen werden, so dass hieraus jeweils sechs bis sechzehn Elektrodenbänder geschnitten werden können, die wiederum je nach Größe der herzustellenden Energiespeicherzellen in unterschiedliche Längen geschnitten werden können.

In bevorzugten Ausführungsformen kann die Breite der bandförmigen Metallfolie beispielsweise 100 bis 1000 mm betragen, vorzugsweise etwa 200 bis 800 mm. Die Streifen aus dem Elektrodenmaterial weisen typischerweise eine Breite im Bereich von 20 mm bis 200 mm, bevorzugt von 50 mm bis 150 mm, auf. Ihre Dicke liegt vorzugsweise unterhalb von 500 µm. Die Länge der bandförmigen Metallfolie kann beispielsweise 1000 bis 3000 m betragen.

Als Materialien für die bandförmigen Elektroden können übliche Materialien eingesetzt werden, die dem Fachmann für die Herstellung von elektrochemischen Energiespeicherelementen bekannt sind. So können als Elektrodenmaterialien beispielsweise übliche anodische Elektrodenmaterialien und kathodische Elektrodenmaterialien verwendet werden, wobei die bandförmige Metallfolie entweder beidseitig mit einem anodischen Elektrodenmaterial oder beidseitig mit einem kathodischen Elektrodenmaterial beschichtet wird.

Das erfindungsgemäße Verfahren eignet sich insbesondere für die Herstellung von bandförmigen Elektroden für Lithium-Ionen-Zellen.

Für viele Anwendungen werden als Energiespeicherelemente sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können insbesondere oxidische Metallverbindungen eingesetzt werden, die Lithium reversibel interkalieren können, beispielsweise Lithiumcobaltoxid (LiCoO₂), Lithiummanganoxid (LiMn₂O₄), Lithiumeisenphosphat (LiFePO₄) oder Derivate hiervon. Das im Rahmen der vorliegenden Erfindung verwendete Elektrodenmaterial kann diese elektrochemisch aktiven Materialien insbesondere in Partikelform umfassen.

Bestandteil der Kompositelektroden ist weiterhin der Stromkollektor, der bei den erfindungsgemäß hergestellten bandförmigen Elektroden bandförmigaus der bandförmigen Metallfolie gebildet wird. Der Stromkollektor dient als Träger für das jeweilige Aktivmaterial. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Entsprechend besteht auch die Metallfolie, die im Rahmen des erfindungsgemäßen Verfahrens mit Elektrodenmaterial beschichtet wird, bevorzugt aus Aluminium, Nickel oder Kupfer. Weiterhin können die Elektroden (und damit auch das im Rahmen der vorliegenden Erfindung verwendete Elektrodenmaterial) als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufigauch die Haftung des Aktivmaterials auf den Stromkollektoren.

Die Erfindung umfasst weiterhin eine Vorrichtung zur Herstellung der bereits beschriebenen bandförmigen Elektroden. Diese Vorrichtung umfasst die folgenden Merkmale:
a. Die Vorrichtung umfasst eine Förderstrecke zur Förderung einer bandförmigen Metallfolie, die eine erste und eine zweite Seite aufweist, in Richtung einer zur Längsrichtung des Metallfolie parallelen Durchlaufrichtung,
b. die Vorrichtung umfasst mehrere Auftragsdüsen, die zur Beschichtung der ersten Seite der bandförmigen Metallfolie und der zweiten Seite der bandförmigen Metallfolien mit einem Elektrodenmaterial dienen und entsprechend positioniert sind,
c. die Auftragsdüsen sind derart positioniert, dass mehrere parallele Streifen aus dem Elektrodenmaterial auf die erste Seite der bandförmigen Metallfolie und eine gleiche Anzahl paralleler Streifen aus dem Elektrodenmaterial auf die zweite Seite der bandförmigen Metallfolie aufbringbar sind, so dass in Blickrichtung senkrecht zur bandförmigen Metallfolie jeweils ein Streifen auf der ersten Seite mit einem der Streifen auf der zweiten Seite der bandförmigen Metallfolie überlappt, wobei auf beiden Seiten zwischen unmittelbar benachbarten parallelen Streifen aus dem Elektrodenmaterial jeweils ein unbeschichteter streifenförmiger Bereich frei von dem Elektrodenmaterial bleibt,
d. die Vorrichtung ist zur simultanen Beschichtung der ersten Seite und der zweiten Seite der bandförmigen Metallfolie mittels der Auftragsdüsen eingerichtet.

Die Vorrichtung ist zur kontinuierlichen Beschichtung der durchlaufenden bandförmigen Metallfolie, die das Material der Stromkollektoren der herzustellenden bandförmigen Elektroden bildet, eingerichtet, wobei hierfür in prinzipiell bekannter Weise entsprechende Walzen und Umlenkrollen sowie Beschichtungsrollen vorgesehen sein können um die bandförmige Metallfolie in Durchlaufrichtung zu transportieren.

Insbesondere kann den Auftragsdüsen, die zur Beschichtung der ersten Seite und der zweiten Seite der Metallfolie eingerichtet sind, jeweils gegenüberliegend eine Beschichtungsrolle zugeordnet sein, so dass also auf der einen Seite sich die Auftragsdüse und auf der anderen Seite die Beschichtungsrolle befindet, so dass durch die Beschichtungsrolle auf die Metallfolie ein Gegendruck während des Beschichtungsvorgangs ausgeübt wird.

Die Auftragsdüsen zur Beschichtung der einen Seite und zur Beschichtung der anderen Seite sind bevorzugt in Durchlaufrichtung versetzt zueinander angeordnet, so dass in Durchlaufrichtung eine Seite der bandförmigen Metallfolie vor der anderen beschichtet wird, wobei die Metallfolie bevorzugt zwischen den beiden Beschichtungspositionen über eine Umlenkrolle geführt wird um die bandförmige Metallfolie in eine geeignete Position für die Beschichtung zu bringen.

Im Hinblick auf die Auftragsdüsen für die Beschichtung zeichnet sich die Vorrichtung in besonders bevorzugter Weise durch mindestens eines der folgenden Merkmale aus:
a. Die Vorrichtung umfasst mehrere Eindüsen-Beschichtungsköpfe mit jeweils einer Auftragsdüse, deren Positionen zueinander variiert werden können,
b. die Eindüsen-Beschichtungsköpfe sind senkrecht zur Durchlaufrichtung der bandförmigen Metallfolie verschiebbar.

Vorzugsweise sind die unmittelbar vorgenannten Merkmale a. und b. in Kombination miteinander verwirklicht.

Diese bevorzugt verschiebbaren Eindüsen-Beschichtungsköpfe sind in der Vorrichtung vorzugsweise nur auf einer Seite der zu beschichtenden bandförmigen Metallfolie vorgesehen. Prinzipiell können jedoch auch fürdie Beschichtung auf beiden Seiten der Metallfolie Eindüsen-Beschichtungsköpfe vorgesehen sein, deren Positionen zueinander variiert werden können.

Es ist besonders bevorzugt, dass die erfindungsgemäße Vorrichtung durch die folgenden zusätzlichen Merkmale gekennzeichnet ist:
a. Die Vorrichtung umfasst mindestens einen Mehrdüsen-Beschichtungskopf, der mehrere Auftragsdüsen in fixen Abständen zueinander umfasst, wobei der mindestens eine Mehrdüsen-Beschichtungskopf zur Beschichtung einer Seite der bandförmigen Metallfolie ausgerichtet ist,
b. die Vorrichtung umfasst mehrere Eindüsen-Beschichtungsköpfe mit jeweils einer Auftragsdüse, deren Positionen zueinander variiert werden können, wobei die Eindüsen-Beschichtungsköpfe zur Beschichtung der anderen Seite der bandförmigen Metallfolie ausgerichtet sind.

Vorzugsweise sind die vorgenannten Merkmale a. und b. in Kombination miteinander verwirklicht, so dass der einen Seite der die Vorrichtung durchlaufenden Metallfolie starr angeordnete Beschichtungsdüsen und der anderen Seite der Metallfolie Auftragsdüsen der erwähnten Eindüsen-Beschichtungsköpfezugeordnetsind. Insbesondere in dieser Ausführungsform derVorrichtung ist es in wenig aufwendiger Weise möglich, auf einen gegebenenfalls auftretenden Versatz zwischen den überlappenden Streifen auf beiden Seiten der bandförmigen Metallfolie zu reagieren und die Auftragsdüsen auf der einen Seite der bandförmigen Metallfolie entsprechend in ihrer Position anzupassen. Zweckmäßigerweise umfasst die Vorrichtung hierfür eine entsprechende Einrichtung zur Verschiebung der Position der Eindüsen-Beschichtungsköpfe zur Vermeidung eines Versatzes zwischen dem Auftrag des Elektrodenmaterials auf beiden Seiten der bandförmigen Metallfolie.

In besonders bevorzugter Weise zeichnet sich die erfindungsgemäße Vorrichtung weiterhin durch mindestens eines der folgenden zusätzlichen Merkmale aus:
a. Die Eindüsen-Beschichtungsköpfe sind bezogen auf die Durchlaufrichtung der zu beschichtenden bandförmigen Metallfolie versetzt zueinander angeordnet,
b. die Eindüsen-Beschichtungsköpfe sind senkrecht zur Durchlaufrichtung derzu beschichtenden bandförmigen Metallfolie in zwei Reihen angeordnet.

Vorzugsweise sind die vorgenannten Merkmale a. und b. in Kombination miteinander verwirklicht.

Diese Anordnungen der Eindüsen-Beschichtungsköpfe erlauben besonders platzsparende Anordnungen der Eindüsen-Beschichtungsköpfe, wobei gleichzeitig die Bewegungsfreiheit beziehungsweise die Verschiebbarkeit der Auftragsdüsen quer zur Durchlaufrichtung der bandförmigen Metallfolie gewährleistet ist.

In besonders vorteilhaften Ausführungsformen ist die erfindungsgemäße Vorrichtung weiterhin durch mindestens eines der folgenden zusätzlichen Merkmale gekennzeichnet:
a. Die Vorrichtung umfasst eine Sensorik zur Erfassung eines möglichen Versatzes zwischen überlappenden Streifen auf der ersten Seite und der zweiten Seite der bandförmigen Metallfolie,
b. die Vorrichtung umfasst eine Trocknungseinrichtung für die beschichtete bandförmige Metallfolie, vorzugsweise einen Schwebetrockner,
c. die Vorrichtung umfasst eine Zertrenneinrichtung, insbesondere eine Schneideinrichtung, zum Zertrennen oder Schneiden der beschichteten bandförmigen Metallfolie in Längsrichtung.

Vorzugsweise umfasst die erfindungsgemäße Vorrichtung sowohl eine Sensorik zur Erfassung eines möglichen Versatzes zwischen den überlappenden Streifen auf beiden Seiten der bandförmigen Metallfolie gemäß dem vorgenannten Merkmal a. als auch eine Trocknungseinrichtung gemäß dem vorgenannten Merkmal b. und eine Schneideinrichtung gemäß dem vorgenannten Merkmal c.

Details zur Sensorik und zur Trocknungseinrichtung wurden bereits im Kontext des erfindungsgemäßen Verfahrens beschrieben. Auf die entsprechenden Ausführungen wird hiermit Bezug genommen.

Die Vorrichtung umfasst weiterhin vorzugsweise eine Einrichtung, beispielsweise ein Steuergerät, zur Auswertung der von der Sensorik erfassten Messwerte und zur Umsetzung dieser Messwerte in eine Korrektur betreffend die Position der Auftragsdüsen.

Bei der Schneideinrichtung kann es sich um eine übliche Schneideinrichtung handeln, die beispielsweise mit geeigneten Messern oder Lasern arbeitet.

Die Erfindung umfasst weiterhin ein Steuerprogramm für eine Vorrichtung zur Herstellung von bandförmigen Elektroden in der oben beschriebenen Weise, wobei dieses Steuerprogramm zur Durchführung des Verfahrens zur Herstellung von bandförmigen Elektroden gemäß der obigen Beschreibung eingerichtet ist. Mit Hilfe dieses Steuerprogramms kann insbesondere eine Korrektur bei der Position der Auftragsdüsen für die Beschichtung bei einem gegebenenfalls auftretenden Versatz bei den überlappenden Streifen des aufgetragenen Elektrodenmaterials auf beiden Seiten der bandförmigen Metallfolie durchgeführt werden.

Die Erfindung umfasst weiterhin bandförmige Elektroden, die mit dem beschriebenen Verfahren hergestellt sind. Bezüglich weiterer Einzelheiten dieser bandförmigen Elektroden wird auf die obige Beschreibung verwiesen.

Weiterhin umfasstdie Erfindungdie Verwendung von bandförmigen Elektroden, die mit dem erfindungsgemäßen Verfahren hergestellt sind, zur Herstellung eines elektrochemischen Energiespeicherelements, insbesondere einer elektrochemischen Energiespeicherzelle oder einer Batterie, die aus mehreren elektrochemischen Energiespeicherzellen aufgebaut ist. Auch die genannten Energiespeicherelemente sind von der Erfindung umfasst.

Bei der Herstellung des elektrochemischen Energiespeicherelements erfolgt vorzugsweise die Kontaktierung der bandförmigen Elektroden über die randseitigen, von Elektrodenmaterial freien Bereiche der Elektrodenbänder. Für die Kontaktierung der Elektroden kann beispielsweise eine Kontaktplatte vorgesehen sein oder es können andere Elemente eines Gehäuses des Energiespeicherelements für die Kontaktierung der Elektroden genutzt werden.

In besonders bevorzugten Ausführungsformen werden die bandförmigen Elektroden zur Herstellung von Lithium-Ionen-Zellen genutzt.

Bezüglich weiterer Merkmale der erfindungsgemäßen bandförmigen Elektroden, die Bestandteil dieser elektrochemischen Energiespeicherelemente sind, und bezüglich des Verfahrens zur Herstellung dieser bandförmigen Elektroden wird auf die obige Beschreibung verwiesen.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander realisiert sein.

### KURZBESCHREIBUNG DER ZEICHNUNGEN

In den Figuren zeigen:
- Fig. 1: schematische Darstellung von fünf Eindüsen-Beschichtungsköpfen mit jeweils einer Auftragsdüse zur Beschichtung einer ersten Seite einer bandförmigen Metallfolie (Teilfigur A) und schematische Darstellung eines Mehrdüsen-Beschichtungskopfes mit fünf Auftragsdüsen zur Beschichtung einer zweiten Seite einer bandförmigen Metallfolie (Teilfigur B);
- Fig. 2: schematische Schnittdarstellungzur kontinuierlichen, mehrspurigen und simultanen Beschichtung von beiden Seiten einer bandförmigen Metallfolie in einer ersten Ausführungsform einer erfindungsgemäßen Vorrichtung;
- Fig. 3: isometrische Darstellung einer erfindungsgemäßen Vorrichtung gemäß der Ausgestaltung der in Fig. 2 gezeigten Vorrichtung;
- Fig. 4: schematische Schnittdarstellungzur kontinuierlichen, mehrspurigen und simultanen Beschichtung von beiden Seiten einer bandförmigen Metallfolie in einer weiteren Ausführungsform einer erfindungsgemäßen Vorrichtung; und
- Fig. 5: isometrische Darstellung einer erfindungsgemäßen Vorrichtung gemäß der Ausgestaltung der in Fig. 4 gezeigten Ausführungsform.

### DETAILLIERTE BESCHREIBUNG DER AUSFÜHRUNGSBEISPIELE

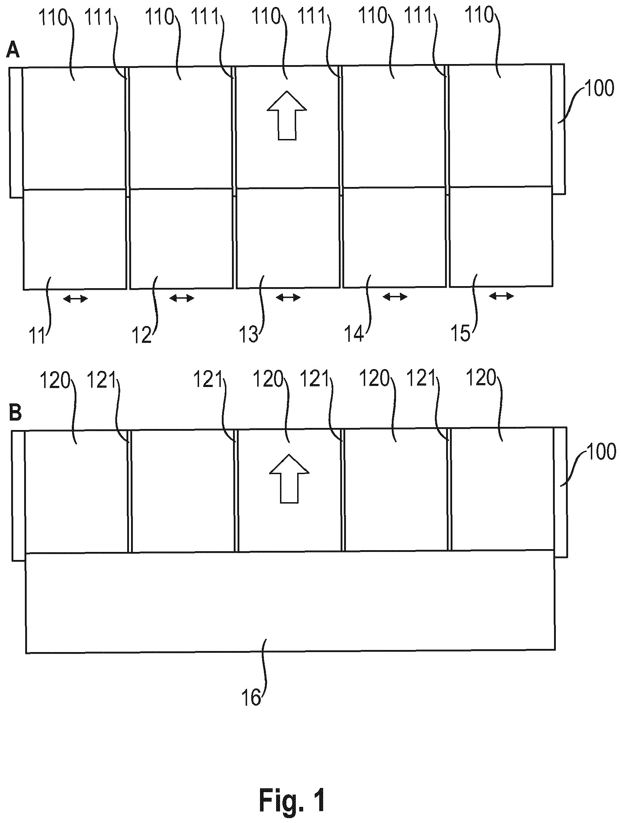

**Fig. 1** illustriert schematisch die Beschichtung beider Seiten einer bandförmigen Metallfolie gemäß der Erfindung. Für die Beschichtung einer ersten Seite der bandförmigen Metallfolie 100 sind in dem hier gezeigten Ausführungsbeispiel (Teilfigur A) fünf Beschichtungsköpfe 11, 12, 13, 14, 15 vorgesehen, die jeweils als Eindüsen-Beschichtungsköpfe ausgebildet sind und dementsprechend jeweils eine Auftragsdüse umfassen. Mit diesen Eindüsen-Beschichtungsköpfen 11 - 15 kann jeweils eine Spur 110 bzw. ein Streifen aus Elektrodenmaterial bei der Beschichtung der bandförmigen Metallfolie 100 aufgetragen werden. Jede Spur 110 bildet einen Streifen aus dem Elektrodenmaterial auf der einen Seite der bandförmigen Metallfolie 100. Zwischen den einzelnen Streifen 110 liegt jeweils ein schmaler unbeschichteter streifenförmiger Bereich 111. Alle Streifen sind parallel zueinander ausgerichtet.

Für die Beschichtung der anderen Seite der bandförmigen Metallfolie 100 ist ein Mehrdüsen-Beschichtungskopf 16 vorgesehen (Teilfigur B), der in diesem Ausführungsbeispiel fünf starr angeordnete Auftragsdüsen umfasst, die zur Auftragung von fünf parallelen Streifen 120 aus Elektrodenmaterial auf der anderen Seite der bandförmigen Metallfolie 100 vorgesehen sind. Zwischen den einzelnen parallelen Streifen 120 sind entsprechend wie auf der anderen Seite der Metallfolie 100 schmale unbeschichtete streifenförmige Bereiche 121 vorgesehen.

Die Streifen werden auf beide Seiten der bandförmigen Metallfolie 100 derart aufgebracht, dass die Streifen 110 auf der einen Seite mit den Streifen 120 auf der anderen Seite (in Blickrichtung senkrecht zur Metallfolie) überlappen, wobei die Erfindung das Problem adressiert, dass ein Versatz zwischen den Streifen 110, 120 auf beiden Seiten der Metallfolie 100 vermieden wird.

Hierfür sieht die Erfindung zunächst die simultane Auftragung der Streifen 110 und 120 auf beiden Seiten der Metallfolie 100 in einem Arbeitsgang vor. Anders als bei herkömmlichen Verfahren wird also nicht zunächst die eine Seite beschichtet und getrocknet, bevor die andere Seite beschichtet und getrocknet wird. Vielmehr sieht die Erfindung vor, dass beide Seiten in zeitlicher Überlappung gleichzeitig beschichtet und vorzugsweise auch gleichzeitig getrocknet werden.

In besonders bevorzugter Weise wird die Beschichtung auf der einen Seite der Metallfolie 100 so vorgenommen, dass die Beschichtung mit Eindüsen-Beschichtungsköpfen erfolgt, deren Position relativ zur Metallfolie und relativ zueinander an einen gegebenenfalls auftretenden Versatz angepasst werden kann.

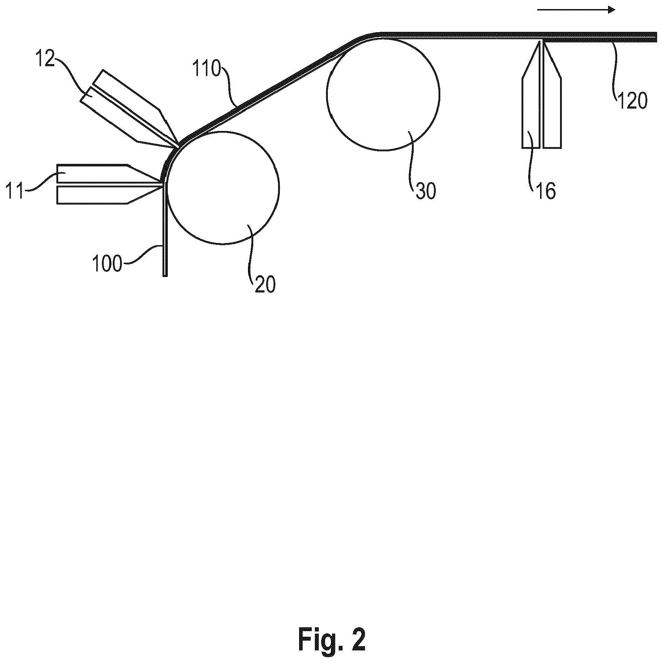

**Fig.** 2 zeigt eine bevorzugte Ausführungsform einer erfindungsgemäßen Vorrichtung. Zur Beschichtung der einen Seite (A-Seite,) sind mehrere Eindüsen-Beschichtungsköpfe 11 - 15 vorgesehen, wobei in dieser in Fig. 2 gezeigten Schnittdarstellung nur die Eindüsen-Beschichtungsköpfe 11 und 12 angedeutet sind. Diese separat ausgebildeten Beschichtungsköpfe 11 und 12 sind in ihrer Position quer zur Breite der zu beschichtenden Metallfolie 100 einstellbar, so dass auf einen gegebenenfalls auftretenden Versatz reagiert werden kann. Die Eindüsen-Beschichtungsköpfe 11 und 12 beziehungsweise alle Eindüsen-Beschichtungsköpfe 11 - 15 arbeiten gegen eine Beschichtungsrolle 20 und sorgen für einen Auftrag eines Elektrodenmaterials auf die bandförmige Metallfolie 100 in mehreren Spuren (Streifen), beispielsweise fünf Spuren (parallele Streifen 110) auf der A-Seite. Die Metallfolie 100 wird über eine Umlenkrolle 30 geführt und gelangt so zu dem Mehrdüsen-Beschichtungskopf 16, mittels dem die ebenfalls mehrspurige Beschichtung 120 auf der anderen Seite (B-Seite) der bandförmigen Metallfolie 100 erfolgt.

Die beidseitig und mehrspurig beschichtete Metallfolie 100 läuft in Pfeilrichtung weiter zu einer hier nicht gezeigten Trocknungseinrichtung. Anschließend kann die Metallfolie 100 in Längsrichtung mehrfach geschnitten werden, wobei vorzugsweise innerhalb der unbeschichteten streifenförmigen Bereiche 111, 121 und in der Mitte der parallelen Streifen 110, 120 aus Elektrodenmaterial geschnitten wird.

Bei einer Auftragung von fünf parallelen Streifen auf beiden Seiten der Metallfolie 100 können somit insgesamt zehn beidseitig beschichtete bandförmige Elektrodenbänder gewonnen werden, die jeweils einen sich entlang einem ihrer Längsränder erstreckenden, beidseitig von Elektrodenmaterial unbedeckten Bereich aufweisen, der für eine Kontaktierung der Elektrodenbänder genutzt werden kann.

Durch die Einstellbarkeit der flexiblen Eindüsen-Beschichtungsköpfe 11 - 15, die in dem in Fig. 2 gezeigten Ausführungsbeispiel für die Beschichtung der A-Seite verwendet werden, kann bei einem gegebenenfalls auftretenden Versatz während der Auftragung der Streifen 110, 120 auf beiden Seiten der Metallfolie die Auftragung auf der A-Seite korrigiert werden, so dass ein Spurversatz zuverlässig korrigiert und damit vermieden wird.

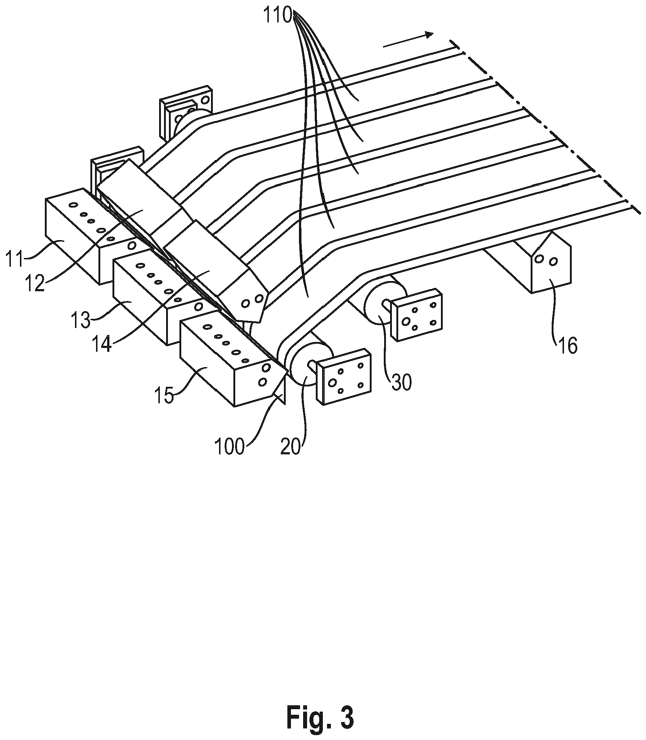

**Fig. 3** zeigt eine isometrische Darstellung der in Fig. 2 schematisch im Schnitt gezeigten Vorrichtung. Dabei sind die Eindüsen-Beschichtungsköpfe 11 - 15 versetzt und in zwei Reihen angeordnet. In der ersten Reihe sind die Eindüsen-Beschichtungsköpfe 11, 13 und 15 angeordnet, versetzt dazu sind in einerzweiten Reihe die Beschichtungsköpfe 12 und 14 angeordnet. In dieser besonders platzsparenden Anordnung der Eindüsen-Beschichtungsköpfe 11 - 15 können die Eindüsen-Beschichtungsköpfe 11 - 15 quer zur Laufrichtung der bandförmigen Metallfolie eingestellt werden, ohne dass sie sich gegenseitig behindern, so dass bei einem auftretenden Versatz zwischen den Spuren 110 und in den hier nicht sichtbaren Spuren 120 auf der gegenüberliegenden Seite der Metallfolie 100 der Spurauftrag auf der hier oben liegenden A-Seite bei den Spuren 110 korrigiert werden kann.

Hier nicht dargestellt ist eine Sensorik, die den gegebenenfalls auftretenden Spurversatz zwischen den Spuren beziehungsweise Streifen 110 und 120 misst. Hierfür kann beispielsweise mehrere Kameras vorgesehen sein, die den Spurauftrag auf beiden Seiten der Metallfolie 100 überwacht.

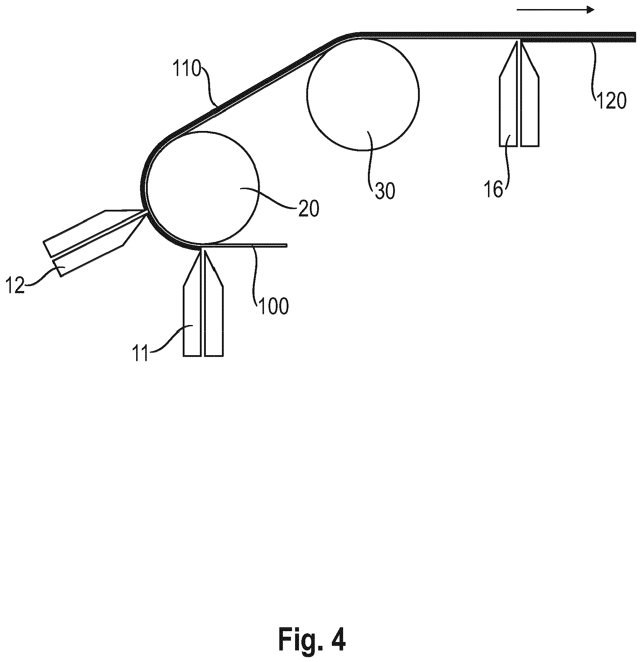

**Fig. 4** zeigt eine weitere Ausführungsform einer für die beidseitige Beschichtung gemäß der Erfindung geeigneten Vorrichtung. Vergleichbar mit der Vorrichtung, die in Fig. 2 gezeigt ist, sind in der hier gezeigten schematischen Schnittdarstellung ebenfalls zwei flexible Eindüsen-Beschichtungsköpfe 11 und 12zu erkennen, die im Zusammenspiel mit der Beschichtungsrolle 20 zur Beschichtung der A-Seite der bandförmigen Metallfolie 100 eingerichtet sind. Hier nicht sichtbar sind die weiteren Eindüsen-Beschichtungsköpfe 13, 14 und 15, die verteilt über die Breite der zu beschichtenden Metallfolie 100 der A-Seite der Metallfolie 100 zugeordnet sind. Diese Eindüsen-Beschichtungsköpfe 11 - 15 sorgen für die mehrspurige Beschichtung in Form von mehreren parallelen Streifen 110 auf der A-Seite der Metallfolie 100. Auch hier wird die bereits einseitig beschichtete Metallfolie 100 über die Umlenkrolle 30 zu dem Mehrdüsen-Beschichtungskopf 16 zur Beschichtung der B-Seite der Metallfolie 100 zur Ausbildung der parallelen Streifen 120 aus Elektrodenmaterial auf der B-Seite der Metallfolie 100 geführt. Im Unterschied zu der in Fig. 2 schematisch im Schnitt gezeigten Vorrichtung ist bei der Vorrichtung in Fig. 4 durch die Beschichtungsrolle 20 ein größerer Umlenkwinkel bei der zu beschichtenden Metallfolie 100 vorgesehen. Die flexiblen Eindüsen-Beschichtungsköpfe 11 - 15 sind dabei in einem anderen Winkel in Bezug zur Krümmung der Metallfolie 100 ausgerichtet.

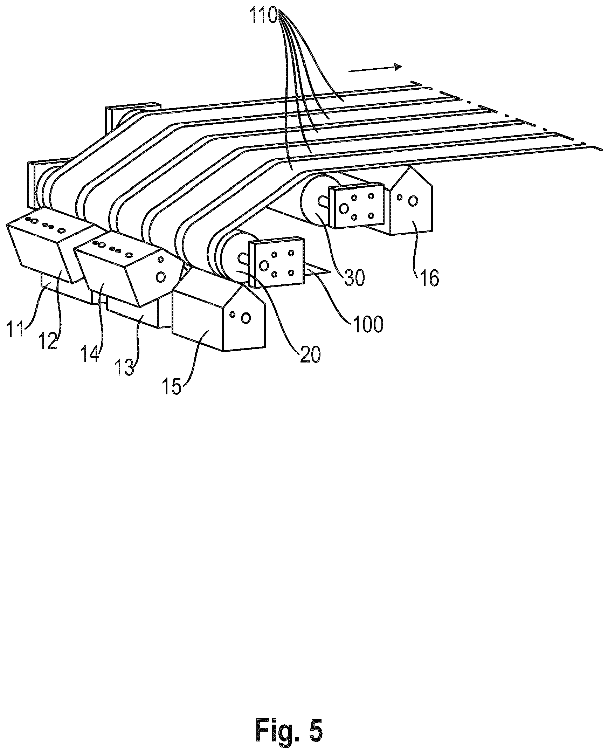

**Fig. 5** zeigt eine isometrische Darstellung der Vorrichtung aus Fig. 4, die mit entsprechenden Bezugszeichen versehen ist. Vergleichbar mit der Darstellung in Fig. 3 ist die versetzte Anordnung der Eindüsen-Beschichtungsköpfe 11 - 15 in zwei Reihen in Bezug zur Laufrichtung der zu beschichtenden Metallfolie 100 zu erkennen.

## Patentansprüche

1. Verfahren zur Herstellung von bandförmigen Elektroden, welche einen bandförmigen Stromkollektor umfassen, der beidseitig mit einer Schicht aus einem Elektrodenmaterial bedeckt ist und der beidseitig einen sich entlang einem seiner Längsränder erstreckenden, nicht mit dem Elektrodenmaterial bedeckten Bereich aufweist, umfassend die folgenden Verfahrensschritte:
a. Bereitstellen einer bandförmigen Metallfolie (100),
b. Beschichten der bandförmigen Metallfolie (100) mit einem Elektrodenmaterial in einem Durchlaufverfahren, wobei mehrere parallele Streifen (120) aus dem Elektrodenmaterial auf die erste Seite der bandförmigen Metallfolie (100) und eine gleiche Anzahl paralleler Streifen (110) aus dem Elektrodenmaterial auf die zweite Seite der bandförmigen Metallfolie (100) aufgebracht werden, so dass in Blickrichtung senkrecht zur bandförmigen Metallfolie(100) jeweils ein Streifen auf der ersten Seite (120) mit einem der Streifen auf der zweiten Seite (110) der bandförmigen Metallfolie (100) überlappt, wobei auf beiden Seiten zwischen unmittelbar benachbarten parallelen Streifen (110, 120) aus dem Elektrodenmaterial jeweils ein unbeschichteter streifenförmiger Bereich (111, 121) frei von dem Elektrodenmaterial bleibt,
**dadurch gekennzeichnet, dass**
c. die parallelen Streifen (110, 120) aus dem Elektrodenmaterial simultan auf die erste Seite und die zweite Seite der bandförmigen Metallfolie (100) aufgebracht werden.

2. Verfahren nach Anspruch 1, **gekennzeichnet durch** die folgenden zusätzlichen Merkmale:
a. Die Streifen (110, 120) aus dem Elektrodenmaterial werden mittels Auftragsdüsen aufgebracht,
b. es wird, vorzugsweise mit Hilfe mindestens eines Sensors, erfasst, ob zwischen überlappenden Streifen (110, 120) auf der ersten Seite und der zweiten Seite ein Versatz auftritt und/oder ob ein Versatz einen vordefinierten Schwellenwert überschreitet, und
c. im Falle eines Versatzes zwischen überlappenden Streifen (110, 120) auf der ersten Seite und der zweiten Seite und/oder bei einem Überschreiten des vordefinierten Schwellenwerts für den Versatz wird die Position mindestens einer der Auftragsdüsen relativ zu der bandförmigen Metallfolie (100) korrigiert.

3. Verfahren nach Anspruch 1 oder nach Anspruch 2, **gekennzeichnet durch** mindestens eines der folgenden zusätzlichen Merkmale:
a. Die Aufbringung der Streifen (110) aus dem Elektrodenmaterial erfolgt auf mindestens einer der Seiten der bandförmigen Metallfolie (100) mittels mehrerer Eindüsen-Beschichtungsköpfe (11, 12, 13, 14, 15) mit jeweils einer Auftragsdüse, deren Positionen zueinander variiert werden können,
b. die Eindüsen-Beschichtungsköpfe (11, 12, 13, 14, 15) sind jeweils senkrecht zur Durchlaufrichtung der bandförmigen Metallfolie (100) verschiebbar.

4. Verfahren nach einem der vorhergehenden Ansprüche, **gekennzeichnet durch** die folgenden zusätzlichen Merkmale:
a. Die Aufbringung der Streifen (120) aus dem Elektrodenmaterial erfolgt auf der ersten Seite der bandförmigen Metallfolie mittels mindestens eines Mehrdüsen-Beschichtungskopfes (16), der mehrere Auftragsdüsen in fixen Abständen zueinander umfasst,
b. die Aufbringung der Streifen (110) aus dem Elektrodenmaterial erfolgt auf der zweiten Seite der bandförmigen Metallfolie (100) mittels der Eindüsen-Beschichtungsköpfe (11, 12, 13, 14, 15) mit jeweils einer Auftragsdüse, deren Positionen relativ zu anderen Auftragsdüsen variiert werden können.

5. Verfahren nach einem der vorhergehenden Ansprüche, **gekennzeichnet durch** mindestens eines der folgenden zusätzlichen Merkmale:
a. Zur Erfassung eines möglichesVersatzes zwischen überlappenden Streifen (110, 120) auf der ersten Seite und der zweiten Seite der bandförmigen Metallfolie (100) werden der Abstand mindestens eines derStreifen (110, 120) von einem Längsrand der bandförmigen Metallfolie (100) und/oder eine Änderung dieses Abstands erfasst,
b. zur Erfassung eines mögliches Versatzes zwischen überlappenden Streifen (110, 120) auf der ersten Seite und der zweiten Seite der bandförmigen Metallfolie (100) werden der Abstand mindestens eines der Streifen (110, 120) von einem benachbarten Streifen und/oder eine Änderung dieses Abstands erfasst,
c. zur Erfassung eines möglichen Versatzes zwischen überlappenden Streifen (110, 120) auf der ersten Seite und der zweiten Seite der bandförmigen Metallfolie (100) werden die Mittellinien der Streifen (110, 120) und/oder eine Änderung der Mittellinien erfasst.

6. Verfahren nach einem der vorhergehenden Ansprüche, **gekennzeichnet durch** mindestens eines der folgenden zusätzlichen Merkmale:
a. Nach der beidseitigen Beschichtung der bandförmigen Metallfolie erfolgt eine Trocknung der Streifen aus dem Elektrodenmaterial,
b. die Trocknung des Elektrodenmaterials erfolgt in einem Schwebetrockner.

7. Verfahren nach einem der vorhergehenden Ansprüche, **gekennzeichnet durch** mindestens eines der folgenden zusätzlichen Merkmale:
a. Nach der beidseitigen Beschichtung der bandförmigen Metallfolie (100) und/oder nach der Trocknung des Elektrodenmaterials wird die mit dem Elektrodenmaterial beschichtete bandförmige Metallfolie (100) zur Ausbildung der bandförmigen Elektroden in Längsrichtung zertrennt, insbesondere geschnitten,
b. Zur Zertrennung der bandförmigen Metallfolie (100) wird die Folie in Längsrichtung geschnitten, wobei ein Schnitt durch mindestens einen der unbeschichteten streifenförmigen Bereiche (111, 121), die zwischen benachbarten Streifen (110, 120) aus dem Elektrodenmaterial angeordnet sind, erfolgt,
c. Zur Zertrennung der bandförmigen Metallfolie (100) wird die Folie in Längsrichtung geschnitten, wobei ein Schnitt durch mindestens einen der Streifen (110, 120) erfolgt.

8. Vorrichtung zur Herstellung von bandförmigen Elektroden, welche einen bandförmigen Stromkollektor umfassen, der beidseitig mit einer Schicht aus einem Elektrodenmaterial bedeckt ist und der beidseitig einen sich entlang einem seiner Längsränder erstreckenden, nicht mit dem Elektrodenmaterial bedeckten Bereich aufweist, umfassend die folgenden Merkmale:
a. Die Vorrichtung umfasst eine Förderstrecke zur Förderung einer bandförmigen Metallfolie (100), die eine erste und eine zweite Seite aufweist, in Richtung einer zur Längsrichtung des Metallfolie (100) parallelen Durchlaufrichtung,
b. die Vorrichtung umfasst mehrere Auftragsdüsen, die zur Beschichtung der ersten Seite der bandförmigen Metallfolie (100) und der zweiten Seite der bandförmigen Metallfolien (100) mit einem Elektrodenmaterial dienen und entsprechend positioniert sind,
c. die Auftragsdüsen sind derart positioniert, dass mehrere parallele Streifen (120) aus dem Elektrodenmaterial auf die erste Seite der bandförmigen Metallfolie (100) und eine gleiche Anzahl paralleler Streifen (110) aus dem Elektrodenmaterial auf die zweite Seite der bandförmigen Metallfolie (100) aufbringbar sind, so dass in Blickrichtung senkrecht zur bandförmigen Metallfolie (100) jeweils ein Streifen auf der ersten Seite (120) mit einem der Streifen auf der zweiten Seite (110) der bandförmigen Metallfolie (100) überlappt, wobei auf beiden Seiten zwischen unmittelbar benachbarten parallelen Streifen (110, 120) aus dem Elektrodenmaterial jeweils ein unbeschichteter streifenförmiger Bereich (111, 121) frei von dem Elektrodenmaterial bleibt,
d. die Vorrichtung ist zur simultanen Beschichtung der ersten Seite und der zweiten Seite der bandförmigen Metallfolie (100) mittels der Auftragsdüsen eingerichtet.

9. Vorrichtung nach Anspruch 8, **gekennzeichnet durch** mindestens eines der folgenden zusätzlichen Merkmale:
a. Die Vorrichtung umfasst mehrere Eindüsen-Beschichtungsköpfe (11, 12, 13, 14, 15) mit jeweils einer Auftragsdüse, deren Positionen zueinander variiert werden können,
b. die Eindüsen-Beschichtungsköpfe (11, 12, 13, 14, 15) sind senkrecht zur Durchlaufrichtung der bandförmigen Metallfolie (100) verschiebbar.

10. Vorrichtung nach Anspruch 8 oder Anspruch 9, **gekennzeichnet durch** die folgenden zusätzlichen Merkmale:
a. Die Vorrichtung umfasst mindestens einen Mehrdüsen-Beschichtungskopf (16), der mehrere Auftragsdüsen in fixen Abständen zueinander umfasst, wobei der mindestens eine Mehrdüsen-Beschichtungskopf(16) zur Beschichtung einer Seite der bandförmigen Metallfolie (100) ausgerichtet ist,
b. die Vorrichtung umfasst mehrere Eindüsen-Beschichtungsköpfe (11, 12, 13, 14, 15) mit jeweils einer Auftragsdüse, deren Positionen zueinander variiert werden können, wobei die Eindüsen-Beschichtungsköpfe (11, 12, 13, 14, 15) zur Beschichtung der anderen Seite der bandförmigen Metallfolie (100) ausgerichtet sind.

11. Vorrichtung nach einem der Ansprüche 8 bis 10, **gekennzeichnet durch** mindestens eines der folgenden zusätzlichen Merkmale:
a. Die Eindüsen-Beschichtungsköpfe (11, 12, 13, 14, 15) sind bezogen auf die Durchlaufrichtung der zu beschichtenden bandförmigen Metallfolie (100) versetzt zueinander angeordnet,
b. die Eindüsen-Beschichtungsköpfe (11, 12, 13, 14, 15) sind senkrecht zur Durchlaufrichtung derzu beschichtenden bandförmigen Metallfolie (100) in zwei Reihen angeordnet.

12. Vorrichtung nach einem der Ansprüche 8 bis 11, gekennzeichnetdurch mindestens eines der folgenden zusätzlichen Merkmale:
a. Die Vorrichtung umfasst eine Sensorik zur Erfassung eines möglichen Versatzes zwischen überlappenden Streifen (110,120) auf der ersten Seite und der zweiten Seite der bandförmigen Metallfolie (100),
b. die Vorrichtung umfasst eine Trocknungseinrichtung für die beschichtete bandförmige Metallfolie (100), vorzugsweise einen Schwebetrockner,
c. die Vorrichtung umfasst eine Zertrenneinrichtung, insbesondere eine Schneideinrichtung, zum Zertrennen oder Schneiden der beschichteten bandförmigen Metallfolie (100) in Längsrichtung.

13. Bandförmige Elektrode, die nach einem Verfahrens gemäß einem der Ansprüche 1 bis 7 hergestellt wurde.

14. Verwendung von bandförmigen Elektroden gemäß Anspruch 14 zur Herstellung eines elektrochemischen Energiespeicherelements.

15. Elektrochemisches Energiespeicherelement, **dadurch gekennzeichnet, dass** das elektrochemische Energiespeicherelement mindestens eine bandförmige Elektrode umfasst, die nach einem Verfahren gemäß einem der Ansprüche 1 bis 7 hergestellt ist.
